(19) Europäisches Patentamt
European Patent Office
Office européen des brevets

(11) **EP 3 988 200 B1**

(12) **EUROPEAN PATENT SPECIFICATION**

(45) Date of publication and mention
of the grant of the patent:
**19.07.2023 Bulletin 2023/29**

(21) Application number: **21203803.8**

(22) Date of filing: **20.10.2021**

(51) International Patent Classification (IPC):
**B01D 53/26** *(2006.01)*    **F04B 39/16** *(2006.01)*
**H04L 9/32** *(2006.01)*

(52) Cooperative Patent Classification (CPC):
**H04L 9/3226; F04B 39/16; H04L 9/3271;**
H04L 2209/34

(54) **SYSTEM AND METHOD TO CONTROL THE ACTIVATION OF A SYSTEM FOR THE DRYING OF COMPRESSED AIR BASED ON THE AUTHENTICATION OF A SUBSTITUTE FILTER**

SYSTEM UND VERFAHREN ZUR STEUERUNG DER AKTIVIERUNG EINES SYSTEMS ZUR TROCKNUNG VON DRUCKLUFT BASIEREND AUF DER AUTHENTIFIZIERUNG EINES ERSATZFILTERS

SYSTÈME ET PROCÉDÉ POUR COMMANDER L'ACTIVATION D'UN SYSTÈME POUR LE SÉCHAGE D'AIR COMPRIMÉ BASÉS SUR L'AUTHENTIFICATION D'UN FILTRE DE SUBSTITUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2020 IT 202000024778**

(43) Date of publication of application:
**27.04.2022 Bulletin 2022/17**

(73) Proprietor: **Evco S.P.A.**
**32036 Sedico (BL) (IT)**

(72) Inventors:
• **BALDAN, Roberto**
**32036 Sedico (BL) (IT)**

• **ZANDEGIACOMO, Alessandro**
**32036 Sedico (BL) (IT)**
• **DAL PONT, Pierluigi**
**32036 Sedico (BL) (IT)**

(74) Representative: **Zamprogno, Bruno et al**
**STUDIO TORTA S.p.A.**
**Via Viotti, 9**
**10121 Torino (IT)**

(56) References cited:
US-A- 4 688 250      US-A1- 2003 001 721
US-A1- 2003 093 381      US-A1- 2015 046 710

**Description**

CROSS-REFERENCE TO RELATED APPLICATIONS

This Patent Application claims priority from Italian Patent Application No. 102020000024778 filed on October 20, 2020.

TECHNICAL FIELD

The invention relates to a system and a method to control the activation of a system for the drying of compressed air based on the authentication of a new substitutive filter.

PRIOR ART

United States Patent Application publication document US 2015/046710 discloses mutual authentication among industrial control modules.
United States Patent Application publication document US 2003/001721 discloses authenticated communications between appliances in a smart home environment.
United States Patent Application publication document US 2003/093381 discloses a method for authenticating data strings using Cyclic Redundancy Check (CRC) values.
United States Patent US 4,688,250 discloses message authentication by means of codeword comparison.
As it is known, some types of compressed air drying systems require, in order to correctly operate, the use of filters that have specific pre-set technical features, namely are structured/sized based on a significant number of control and operation parameters of the drying system.
The maintenance operation to which the aforesaid systems are subjected requires a periodic replacement of exhausted filters with new filters, which, however, need to have the aforesaid specific pre-set technical features in order to ensure the correct operation of the drying system. To this aim, those companies that install drying systems need to make sure that the new filters installed by their customers as a replacement for prior exhausted filters comply with the standards set during the designing phase, namely have all the technical features needed to ensure the correct operation of the drying system.
Indeed, the installation of a "non-compliant" filter can significantly jeopardize the operation of the drying system and determine downtime of the system and/or maintenance requests with relative costs.

SUBJECT-MATTER OF THE INVENTION

Therefore, the object of the invention is to provide a simple and economic solution, which authenticates the installation of a filter in a drying plant as a replacement of an exhausted filter.
Hence, the object of the invention is to provide a solution that allows the aim described above to be reached.
This object is reached by the invention for it relates to a system and a method to control the activation of a drying system based on the occurred authentication of a substitutive filter.

BRIEF DESCRIPTION OF THE DRAWINGS

The invention will now be described with reference to the accompanying drawings, showing a non-limiting embodiment thereof, wherein:

- Figure 1 is a block diagram of the system to control the activation of a compressed air drying system based on the authentication of a substitutive filter, according to the invention;
- Figure 2 is a block diagram of the method to control the activation of a drying system based on the authentication of a substitutive filter, according to the invention;
- Figure 3 is a block diagram of a first program used in the method to control the activation of a drying system based on the authentication of a substitutive filter, according to the invention;
- Figure 4 is a block diagram of a second program used in the method to control the activation of a drying system based on the authentication of a substitutive filter, according to the invention.

PREFERRED EMBODIMENT OF THE INVENTION

The invention will now be described in detail with reference to the accompanying Figures, so as to allow a person skilled in the art to carry it out and use it. Possible changes to the embodiments described herein will immediately be evident to skilled people and the generic principles described herein can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the principles and the features described and claimed herein.

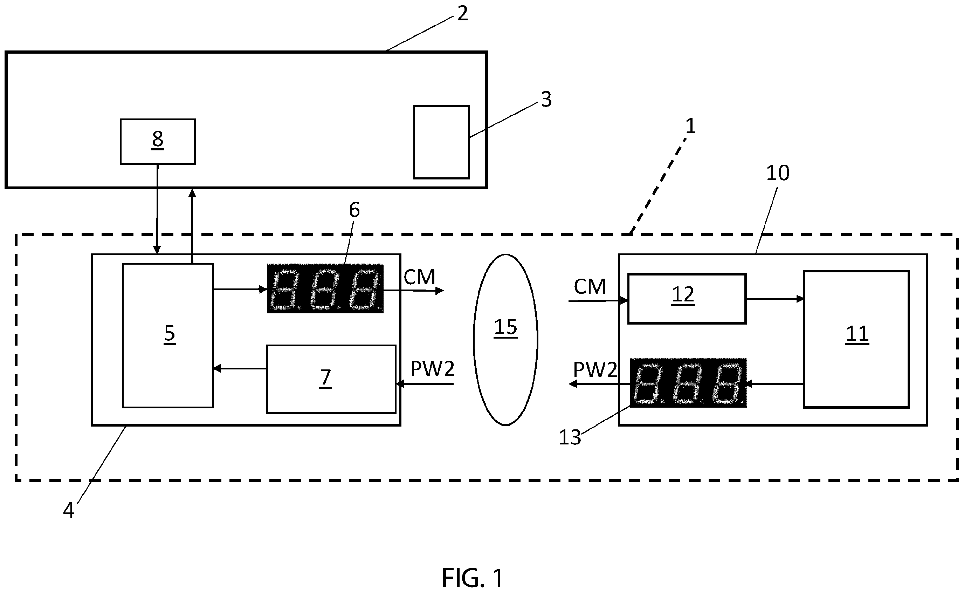

With reference to figure 1, number 1 schematically indicates, as a whole, a control system designed to control the activation of a drying system 2, preferably a compressed air drying system, based on the authentication of a substitutive filter 3 in the drying system 2.

The drying system 2 is known and will not be described any further, if not to point out that it cooperates with an electronic control apparatus 4, which is designed to control the operation of the drying system 2.

According to a preferred embodiment shown in Figure 1, the electronic control apparatus 4 is designed to control the operation of the drying system 2 and comprises: a microcontroller 5, a display 6 electrically connected to the microcontroller 5 and, preferably, a control device 7, for example a control keyboard, electrically connected to the microcontroller 5 so as to allow users to enter data.

The electronic control apparatus 4 can further preferably comprise a temperature probe 8, which is located in the drying system 2 and is configured so as to provide the microcontroller 5 with the temperature of the dried air (not shown). The microcontroller 5 can be configured to cooperate with at least one electronic controller (not shown) of the electronic control device 4 in order to control the operations implemented during the air drying program/process, at least based on the temperature measured through the temperature probe 8 and/or based on other control parameters.

According to the preferred embodiment, the microcontroller 5 is configured so as to detect a maintenance request condition. The maintenance request condition can be detected, for example, when the filter 3 has to be replaced. For instance, the microcontroller 5 can detect a maintenance request for the filter 3 based on one or more filter use parameters, such as, for example, the time of use of the filter 3 in the drying system 2.

The microcontroller 5 is further configured so as to deactivate/interrupt the operation of the drying system 2 based on the detection of the maintenance request condition.

The microcontroller 5 is further configured so as to generate a maintenance code CM, when it detects the maintenance request condition.

The microcontroller 5 is further configured so as to determine a first keyword PW1 based on the maintenance code CM.

The maintenance code CM can be displayed to users through the display 6. Preferably, the display 6 can be a seven-segment display, preferably a LED or LCD display. For example, the display 6 can be configured to display a maintenance code CM comprising three alphanumeric characters.

The microcontroller 5 is further configured so as to: receive, as an input, a second keyword PW2 associated with the condition of replacement of the filter 3 with a new filter 3, compare the first keyword PW1 with the second keyword PW2, authenticate the new filter 3 based on the result of the comparison, and activate the operation of the drying system 2 based on the occurred authentication.

The system 1 further comprises a remote electronic authentication system 10, which is designed to determine the second keyword PW2 based on the maintenance code CM displayed by the display 6.

According to a preferred embodiment shown in Figure 1, the remote electronic authentication system 10 can comprise a processing unit 11, which is designed to receive, as an input, the maintenance code CM and provide, as an output, the second keyword PW2. The maintenance code PW2 can be input into the processing unit 11 through a control device 12 or the like, whereas the second keyword PW2 can be displayed, for example, through a display 13.

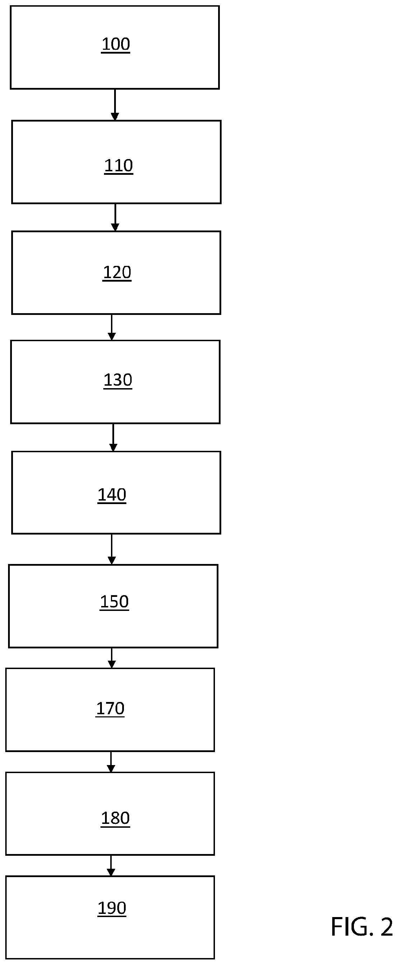

The operating method of the system 1 will now be described with reference to Figure 2:

The method comprises: detecting, by means of the microcontroller 5, the maintenance request condition (block 100), implementing a first program (block 110) to determine the maintenance code CM, implementing a second program (block 120) to determine the first keyword PW1, and displaying the maintenance code CM through the display 6 (block 130).

The method further comprises the steps of communicating the maintenance code CM to the electronic authentication system 10 (block 140), implementing, through the electronic processing unit 11 of the electronic authentication system 10, the second program to determine the second keyword PW2 based on the maintenance code CM (block 150), and communicating the second keyword PW2 to users of the control apparatus 4 of the drying system 2.

The communication of the maintenance code CM to the electronic authentication system 10 and/or the communication of the second keyword PW2 to users of the control apparatus 4 of the drying system 2 can take place through any communication system 15. The communication system 15 can be, for example, a phone communication system and/or a network system or similar systems.

The method further comprises the steps of inputting the second keyword PW2 into the microcontroller 5 (block 160), comparing the second keyword with the first keyword through the microcontroller 5 (block 170), authenticating the new filter 3 based on the result of the comparison (block 180), and activating the operation of the drying system 2 based on the occurred authentication (block 190).

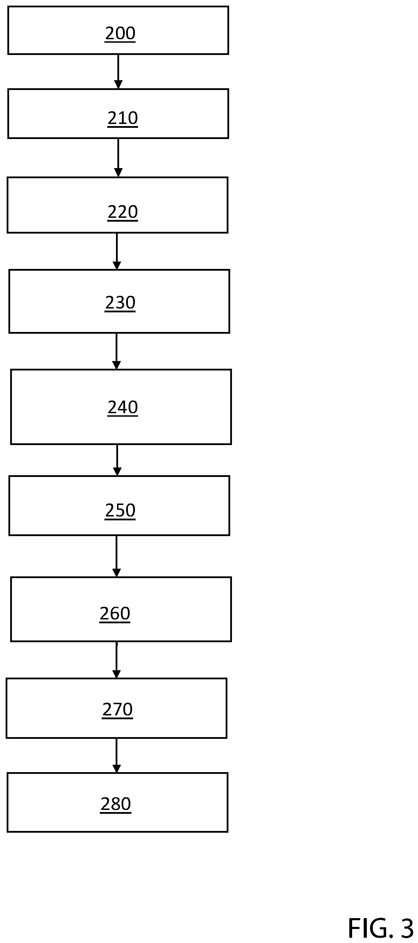

Figure 3 is a block diagram of the operations implemented by the first program (block 110 in Figure 2) to generate the maintenance code CM. The first program comprises the step of receiving, as in input, a first numeric value preferably associated with the microcontroller 5 (block 200). The first numeric value can conveniently comprise, for example, the microcontroller serial identification number UUID (acronym of Universally Unique Identifier). For instance, the Applicant used, during tests, a microcontroller belonging to HC9S08PA, whose serial number (UUID) has a length of eight bytes.

The first program further comprises the step of receiving, as in input, a second numeric value indicative of the maintenance condition (block 210). The second numeric value can be a number generated by an inner counter (not shown) of the microcontroller 5 based on the number of maintenance requests generated by the control system 1. The Applicant deemed it convenient to use a counter comprising one byte. The counter can be increased by one bit when the microcontroller 5 detects the maintenance request condition and/or when it receives the second keyword PW2 for the third time for the authentication, but it is not correct.

The first program further comprises the step of implementing a first function on the first numeric value and on the second numeric value in order to determine the maintenance code CM (block 220). The Applicant deemed it advantageous to implement a first function corresponding to the cyclic redundancy check CRC function/program used by the microcontroller 5 for the serial communication with other components. More in detail, the Applicant deemed it advantageous to use the cyclic redundancy check CRC function/program used by the microcontroller 5 for the Modbus RTU serial communication to determine the maintenance code CM.

According to a possible embodiment, the microcontroller 5 sequentially repeats the cyclic redundancy check CRC function on the string made up of the first numeric value and the second numeric value. For example, in case the first value corresponds to the microcontroller serial identification number UUID with eight bytes and the second value corresponds to the counter with one byte, the microcontroller 5 sequentially repeats the cyclic redundancy check CRC function on the string consisting of nine bytes, eight of them making up the first numeric value and one byte making up the measure of the counter, so as to determine, at the end of the repetition, a third numeric value corresponding to a numeric value calculated by the hexadecimal cyclic redundancy check CRC (CRC16) (block 230).

The first program further comprises: the step of calculating the module of the third value (block 240), the step of dividing the module of the third value by a predetermined number (block 250), and the step of determining the rest of the division, preferably with a decimal base (block 260). In other words, the first program calculates the module (rest of the decimal base division with natural numbers) between the third value and a predetermined number ($26 \times 26 \times 26 = 17576$).

The first program further comprises: the step of converting the numeric value corresponding to the rest of the division preferably with decimal base in the rest of the division base twenty-six (block 270) and assigning the latter calculated value to the maintenance code CM (block 280).

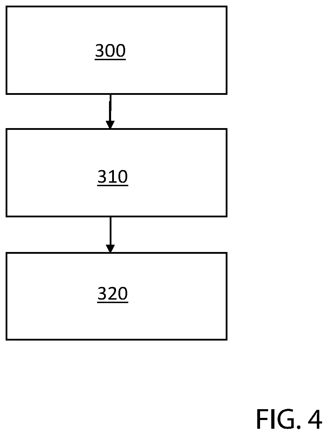

With reference to Figure 4, the operating steps of the second program (block 150 in Figure 2) will be described below.

The second program can comprise the step of normalising the maintenance code N (block 300). Preferably, the step of normalising the maintenance code CM can comprise the step of carrying out the normalisation based on a predetermined numeric interval. Preferably, the interval can range from 0 to 32767. Preferably, the step of normalising can be carried out through the following equation

$$\text{a) } Nn = (CM * 32767) / (Nmax - 1) = (CM * 32767) / 17575$$

wherein Nmax = (26*26*26) = 17576

The Applicant deemed it convenient to carry out the calculation by means of whole numbers, so as to exclude the rest of division.

The second program can comprise the step of calculating a value PAS through the following equation (block 310)

$$\text{b) } PAS = Abs(Nn * GAIN / 65536 + OFFSET)$$

wherein:

Abs is the mathematical function "absolute value" suited to make the result of the equation b) positive,
Nn is the maintenance code (CM) normalised in the previous step,
GAIN is a first coefficient determined by means of a non-linear function FNL based on the normalised value Nn,
OFFSET is a second coefficient determined by means of the non-linear function FNL based on the normalised value Nn.

Preferably, the non-linear function FNL can comprise a continuous non-linear function geometrically characterised by a series of segments or broken lines, each having a relative angular coefficient as compared to a pre-established reference system.

For example, the continuous non-linear function can be represented by means of the table shown below formed by a plurality of segments (comprised between 1 and 17), wherein each segment (or broken line) is defined by an interval comprised between a numeric "start" value and a numeric "end" value, to which a first coefficient and a second coefficient unequivocally correspond.

| Segment | Start | End | Gain | Offset |
|---|---|---|---|---|
| 1 | 0 | 7655 | -17668 | 8166 |
| 2 | 7655 | 10254 | -13616 | 7693 |
| 3 | 10254 | 13470 | -11004 | 7284 |
| 4 | 13470 | 17139 | -9556 | 6987 |
| 5 | 17139 | 20901 | -9250 | 6907 |
| 6 | 20901 | 23230 | -10270 | 7232 |
| 7 | 23230 | 25275 | -11440 | 7647 |
| 8 | 25275 | 26967 | -13942 | 8612 |
| 9 | 26967 | 27672 | -17382 | 10027 |
| 10 | 27672 | 28287 | -19180 | 10787 |
| 11 | 28287 | 28815 | -21844 | 11937 |
| 12 | 28815 | 29262 | -26976 | 14193 |
| 13 | 29262 | 29638 | -30676 | 15845 |
| 14 | 29638 | 29949 | -38772 | 19507 |
| 15 | 29949 | 30205 | -45056 | 22377 |
| 16 | 30205 | 30577 | -62188 | 30274 |
| 17 | 30577 | 65535 | -99836 | 47840 |

Finally, the second program can comprise the step of converting the value PAS calculated with base 26 so as to determine the second keyword PW2 (block 330) to be input into the control device 7.

The system described above is advantageous since it is simple and economic and validates the filter so that it can be authenticated.

Finally, it is clear that the system and the method described above can be subjected to changes and variations, without for this reason going beyond the scope of protection of the invention defined in the appended claims.

**Claims**

1. A method to control the activation of a drying system for drying compressed air (2) based on the occurred substitution of a filter (3) in the drying system (2);
said method comprises:

generating a maintenance code (CM) of said drying system (2) by a microcontroller (5) included in a electronic control apparatus (4) which is designed to control said drying system (2),
determining, by said microcontroller (5), a first keyword (PW1) based on said maintenance code (CM),
displaying said maintenance code (CM) by a display (7),
communicating said maintenance code (CM) to a remote electronic authentication system (10),
determining, by said remote electronic authentication system (10), a second keyword (PW2) based on said maintenance code (CM),
receiving said second keyword (PW2) from said electronic authentication system (10),
providing said second keyword (PW2) to said microcontroller (5),
comparing, by said microcontroller (5), said first keyword (PW1) with said second keyword (PW2),
authenticating, by said microcontroller (5), the activation of the operation of said drying system (2) based on the result of said comparison,

said method being **characterised in that** it comprises:

determining said maintenance code (CM) based on a first parameter indicative of a code associated with said microcontroller (5) and on a second parameter indicative of an events counter,
implementing a non-linear function (FNL) for determining said first keyword (PW1) and said second keyword (PW2) based on said maintenance code (CM).

2. The method according to claim 1, comprising:
   determining said maintenance code (CM) by implementing a first function on the first and second values, wherein said first function is the cyclic redundancy check function/program (CRC) used by said microcontroller (5).

3. The method according to claim 2, comprising:
   implementing the cyclic redundancy check function (CRC) on a string composed of said first and second numeric values in order to determine a third numeric value at the end of the reiteration.

4. The method according to claim 3, comprising:
   calculating the module of the rest of the division with decimal base with natural numbers between the third value with a predetermined number, converting the numeric value in a rest of division having a base of twenty-six, and assigning the latter calculated value to said maintenance code (CM).

5. The method according to claim 4, comprising the step of normalising said maintenance code (CM) through the following equations

$$a) \quad Nn = (CM*32767)/(Nmax-1) = (CM*32767)/17575$$

wherein Nmax = (26*26*26) = 17576

6. The method according to claim 5, comprising the step of calculating a value (PAS) by the following equation

$$b) \quad PAS = Abs(Nn * GAIN/65536 + OFFSET)$$

wherein:

Abs is a modulus function or absolute value,
Nn is the maintenance code (CM) normalised in the previous step,
GAIN is a first coefficient determined by said non-linear function (FNL) based on the normalised value Nn,
OFFSET is a second coefficient determined by said non-linear function (FNL) based on the normalised value Nn.

7. The method according to claim 6, wherein said non-linear function (FNL) comprises a continuous non-linear function geometrically **characterised by** a series of segments or broken lines each having a relative angular coefficient as compared to a pre-established reference system.

8. The method according to claim 7, wherein said non-linear function (FNL) comprises the table shown below formed by a plurality of segments (comprised between 1 and 17), wherein each segment (or broken line) is defined by an interval comprised between a numeric "start" value and a numeric "end" value to which a first coefficient and a second coefficient unequivocally correspond.

| Segment | Start | End | Gain | Offset |
|---------|-------|-------|--------|--------|
| 1 | 0 | 7655 | -17668 | 8166 |
| 2 | 7655 | 10254 | -13616 | 7693 |
| 3 | 10254 | 13470 | -11004 | 7284 |
| 4 | 13470 | 17139 | -9556 | 6987 |
| 5 | 17139 | 20901 | -9250 | 6907 |
| 6 | 20901 | 23230 | -10270 | 7232 |
| 7 | 23230 | 25275 | -11440 | 7647 |
| 8 | 25275 | 26967 | -13942 | 8612 |
| 9 | 26967 | 27672 | -17382 | 10027 |
| 10 | 27672 | 28287 | -19180 | 10787 |
| 11 | 28287 | 28815 | -21844 | 11937 |
| 12 | 28815 | 29262 | -26976 | 14193 |
| 13 | 29262 | 29638 | -30676 | 15845 |
| 14 | 29638 | 29949 | -38772 | 19507 |
| 15 | 29949 | 30205 | -45056 | 22377 |
| 16 | 30205 | 30577 | -62188 | 30274 |
| 17 | 30577 | 65535 | -99836 | 47840 |

9. The method according to any one of the preceding claims, wherein said first number comprises the serial identification number of said microcontroller (5); and said second numeric value is generated by a counter inside said microcontroller (5) based on the number of maintenance request conditions.

10. A system for controlling the activation of a drying system for drying compressed air (2) based on the occurred substitution of a filter (3) in the drying system (2), said system comprises a remote electronic authentication system (10) and an electronic control apparatus (4) which is designed to control said drying system (2) and is provided with: a microcontroller (5), a display (7), a control device designed to allow user to input data in said microcontroller (5), said system is configured so as to:

> generate a maintenance code (CM) of said drying system (2) by said microcontroller (5),
> determining, by said microcontroller (5), a first keyword (PW1) based on said maintenance code (CM),
> displaying, by said display (7), said maintenance code (CM),
> determining by a said remote electronic authentication system (10) a second keyword (PW2) authenticated based on said maintenance code (CM),
> inputting into said microcontroller (5) said second authenticated keyword (PW2),
> comparing, by said microcontroller (5), said first keyword (PW1) with said second keyword (PW2),
> authenticating, by said microcontroller (5), the activation of the operation of said drying system (2) based on the result of said comparison,
> said system is **characterised in that** it is furthermore configured to:

>> determining said maintenance code (CM) based on a first parameter indicative of a code associated with said microcontroller (5) and on a second parameter indicative of an event counter,
>> implementing a non-linear function (FNL) for determining said first keyword (PW1) and said second keyword (PW2) based on said maintenance code (CM).

**EP 3 988 200 B1**

**Patentansprüche**

1. Verfahren zur Steuerung der Aktivierung eines Trocknungssystems zur Trocknung von Druckluft (2) basierend auf dem erfolgten Austausch eines Filters (3) im Trocknungssystem (2); wobei das Verfahren umfasst:

   Erzeugen eines Wartungscodes (CM) des Trocknungssystems (2) durch einen Mikrocontroller (5), welcher in einem elektronischen Steuergerät (4) umfasst ist, welches dazu ausgelegt ist, um das Trocknungssystem (2) zu steuern,
   Bestimmen, durch den Mikrocontroller (5), eines ersten Schlüsselworts (PW1) basierend auf dem Wartungscode (CM),
   Darstellen des Wartungscodes (CM) durch eine Anzeige (7),
   Kommunizieren des Wartungscodes (CM) an ein entferntes elektronisches Authentifizierungssystem (10),
   Bestimmen, durch das entfernte elektronische Authentifizierungssystem (10), eines zweiten Schlüsselwortes (PW2) basierend auf dem Wartungscode (CM),
   Erhalten des zweiten Schlüsselwortes (PW2) von dem elektronischen Authentifizierungssystem (10),
   Bereitstellen des zweiten Schlüsselwortes (PW2) an den Mikrocontroller (5), Vergleichen, durch den Mikrocontroller (5), des ersten Schlüsselwortes (PW1) mit dem zweiten Schlüsselwort (PW2),
   Authentifizieren, durch den Mikrocontroller (5), der Aktivierung des Betriebs des Trocknungssystems (2) basierend auf dem Resultat des Vergleichs,
   wobei das Verfahren **dadurch gekennzeichnet ist, dass** es umfasst:

   Bestimmen des Wartungscodes (CM) basierend auf einem ersten Parameter, der auf einen mit dem Mikrocontroller (5) assoziierten Code hinweist, und auf einem zweiten Parameter, der auf einen Vorgangszähler hinweist,
   Implementieren einer nichtlinearen Funktion (FNL) zum Bestimmen des ersten Schlüsselwortes (PW1) und des zweiten Schlüsselwortes (PW2) auf Basis des Wartungscodes (CM).

2. Verfahren nach Anspruch eins, aufweisend:
   Bestimmen des Wartungscodes (CM) durch Implementieren einer ersten Funktion auf den ersten und zweiten Werten, wobei die erste Funktion eine zyklische Redundanzprüfungsfunktion bzw. -programm (CRC) ist, welche von dem Mikrocontroller (5) verwendet wird.

3. Verfahren nach Anspruch 2, umfassend:
   Implementieren der zyklischen Redundanzprüfungsfunktion (CRC) auf einem String, der aus den ersten und zweiten numerischen Werten gebildet ist, um einen dritten numerischen Wert am Ende der Reintegration zu bestimmen.

4. Verfahren nach Anspruch 3, umfassend:
   Berechnen des Moduls des Restes der Division mit Dezimalbasis mit natürlichen Zahlen zwischen dem dritten Wert mit einer vorbestimmten Zahl, Konvertieren des numerischen Wertes in einen Rest einer Division auf einer Basis von 26, und zuordnen des letzteren berechneten Wertes zu dem Wartungscode (CM).

5. Verfahren nach Anspruch 4, umfassend den Schritt des Normalisierens des Wartungscodes (CM) durch die folgenden Gleichungen

$$a) \ Nn = (CM \ x \ 32767)/ \ (Nmax-1) = (CM \ x \ 32767)/17575$$

   wobei Nmax = $(26 \times 26 \times 26)$ = 17576

6. Verfahren nach Anspruch 5, umfassend den Schritt des Berechnens eines Wertes (PAS) durch die folgende Gleichung

$$b) \ PAS = Abs \ (Nn \ x \ GAIN/65536 + OFFSET)$$

   wobei:

8

Abs eine Modulusfunktion oder ein Absolutwert ist,
Nn der im vorigen Schritt normalisierte Wartungscode (CM) ist,
GAIN ein erster Koeffizient ist, der durch die nichtlineare Funktion (FNL) basierend auf dem normalisierten Wert Nn ist,
OFFSET ein zweiter Koeffizient ist, der durch die nichtlineare Funktion (FNL) basierend auf dem normalisierten Wert Nn bestimmt ist.

7. Verfahren nach Anspruch 6, wobei die nichtlineare Funktion (FNL) eine stetige nichtlineare Funktion umfasst, die geometrisch durch eine Folge von Segmenten oder gebrochenen Linien charakterisiert ist, die jeweils einen relativen Winkelkoeffizient im Vergleich zu einem zuvor erstellten Referenzsystem aufweisen.

8. Verfahren nach Anspruch 7, wobei die nichtlineare Funktion (FNL), die im Folgenden dargestellte Tabelle umfasst, welche aus einer Vielzahl von Segmenten gebildet ist (enthalten zwischen 1 und 17), wobei jedes Segment (oder jede gebrochene Linie) durch ein Intervall definiert ist, dass zwischen einem numerischen "Start"-Wert und einem numerischen "End"-Wert enthalten ist, dem ein erster Koeffizient und ein zweiter Koeffizient eindeutig entsprechen.

| Segment | Start | End | Gain | Offset |
|---|---|---|---|---|
| 1 | 0 | 7655 | -17668 | 8166 |
| 2 | 7655 | 10254 | -13616 | 7693 |
| 3 | 10254 | 13470 | -11004 | 7284 |
| 4 | 13470 | 17139 | -9556 | 6987 |
| 5 | 17139 | 20901 | -9250 | 6907 |
| 6 | 20901 | 23230 | -10270 | 7232 |
| 7 | 23230 | 25275 | -11440 | 7647 |
| 8 | 25275 | 26967 | -13942 | 8612 |
| 9 | 26967 | 27672 | -17382 | 10027 |
| 10 | 27672 | 28287 | -19180 | 10787 |
| 11 | 28287 | 28815 | -21844 | 11937 |
| 12 | 28815 | 29262 | -26976 | 14193 |
| 13 | 29262 | 29638 | -30676 | 15845 |
| 14 | 29638 | 29949 | -38772 | 19507 |
| 15 | 29949 | 30205 | -45056 | 22377 |
| 16 | 30205 | 30577 | -62188 | 30274 |
| 17 | 30577 | 65535 | -99836 | 47840 |

9. Verfahren nach einem der vorhergehenden Ansprüche, wobei die erste Zahl die serielle Identifikationsnummer des Mikrocontrollers (5) umfasst; und der zweite numerische Wert von einem Zähler im Inneren des Mikrocontrollers (5) basierend auf der Anzahl von Wartungsanfragebedingungen erzeugt wird.

10. System zur Steuerung der Aktivierung eines Trocknungssystems zum Trocknen von Druckluft (2) auf Basis des erfolgten Austausches eines Filters (3) im Trocknungssystem (2), wobei das System ein entferntes elektronisches Authentifizierungssystem (10) und ein elektronisches Steuergerät (4) umfasst, welches eingerichtet ist, um das Trocknungssystem (2) zu steuern und ausgestattet ist mit: einem Mikrocontroller (5), einer Anzeige (7), einer Steuerungsvorrichtung, welche einen Nutzer ermöglicht, Eingangsdaten in den Mikrocontroller (5), einzugeben, wobei das System eingerichtet ist, um:

einen Wartungscode (CM) des Trocknungssystems (2) durch den Mikrocontroller (5) zu erzeugen,
durch den Mikrocontroller (5) ein erstes Schlüsselwort (PW1) auf Basis des Wartungscodes (CM) zu erzeugen,

durch die Anzeige (7) den Wartungscode (CM) anzuzeigen,

durch das entfernte elektronische Authentifizierungssystem (10) ein zweites Schlüsselwort (PW2) zu bestimmen, welches auf Basis des Wartungscodes (CM) authentifiziert ist,

in den Mikrocontroller (5) das zweite authentifizierte Schlüsselwort (PW2) einzugeben,

durch den Mikrocontroller (5) das erste Schlüsselwort (PW1) mit dem zweiten Schlüsselwort (PW2) zu vergleichen,

durch den Mikrocontroller (5) die Aktivierung des Betriebs des Trocknungssystems (2) auf Basis des Ergebnisses des Vergleichs zu authentifizieren,

wobei das System **dadurch gekennzeichnet ist, dass** es weiterhin eingerichtet ist, um:

den Wartungscode (CM) auf Basis eines ersten Parameters zu bestimmen, der auf einen mit dem Mikrocontroller (5) assoziierten Code hinweist, und einen zweiten Parameter, der auf einen Vorgangszähler hinweist,

Implementieren einer nichtlinearen Funktion (FNL) zum Bestimmen des ersten Schlüsselwortes (PW1) und des zweiten Schlüsselwortes (PW2) auf Basis des Wartungscodes (CM).

## Revendications

1. Procédé destiné à commander l'activation d'un système de séchage pour sécher un air comprimé (2) sur la base de la substitution survenue d'un filtre (3) dans le système de séchage (2) ; ledit procédé comprend :

la production d'un code de maintenance (CM) dudit système de séchage (2) par un microcontrôleur (5) inclus dans un appareil de commande (4) électronique qui est conçu pour commander ledit système de séchage (2), la détermination, par ledit microcontrôleur (5), d'un premier mot-clé (PW1) sur la base dudit code de maintenance (CM),

l'affichage dudit code de maintenance (CM) par un afficheur (7),

la communication dudit code de maintenance (CM) à un système d'authentification électronique (10) à distance, la détermination, par ledit système d'authentification électronique (10) à distance, d'un second mot-clé (PW2) sur la base dudit code de maintenance (CM),

la réception dudit second mot-clé (PW2) depuis ledit système d'authentification électronique (10),

la fourniture dudit second mot-clé (PW2) audit microcontrôleur (5),

la comparaison, par ledit microcontrôleur (5), dudit premier mot-clé (PW1) avec ledit second mot-clé (PW2),

l'authentification, par ledit microcontrôleur (5), de l'activation du fonctionnement dudit système de séchage (2) sur la base du résultat de ladite comparaison,

ledit procédé étant **caractérisé en ce qu'**il comprend :

la détermination dudit code de maintenance (CM) sur la base d'un premier paramètre indiquant un code associé audit microcontrôleur (5) et d'un second paramètre indiquant un compteur d'événements,

la mise en oeuvre d'une fonction non linéaire (FNL) pour déterminer ledit premier mot-clé (PW1) et ledit second mot-clé (PW2) sur la base dudit code de maintenance (CM).

2. Procédé selon la revendication 1, comprenant :
la détermination dudit code de maintenance (CM) par la mise en oeuvre d'une première fonction sur les première et deuxième valeurs, dans lequel ladite fonction est la fonction/le programme de contrôle de redondance cyclique (CRC) utilisé(e) par ledit microcontrôleur (5).

3. Procédé selon la revendication 2, comprenant :
la mise en oeuvre de la fonction de contrôle de redondance cyclique (CRC) sur une chaîne composée desdites première et deuxième valeurs numériques afin de déterminer une troisième valeur numérique à la fin de la réitération.

4. Procédé selon la revendication 3, comprenant :
le calcul du module du reste de la division avec une base décimale avec des entiers naturels entre la troisième valeur avec un nombre prédéterminé, la conversion de la valeur numérique en un reste de division présentant une base de vingt-six, et l'attribution de cette dernière valeur audit code de maintenance (CM).

5. Procédé selon la revendication 4, comprenant l'étape de normalisation dudit code de maintenance (CM) via les

équations suivantes

$$a)\ Nn = (CM*32767)/(Nmax-1) = (CM*32767)/17575$$

où Nmax = (26*26*26) = 17576

**6.** Procédé selon la revendication 5, comprenant l'étape de calcul d'une valeur (PAS) par l'équation suivante

$$b)\ PAS = Abs(Nn*GAIN/65536+OFFSET)$$

où :

Abs est une fonction module ou une valeur absolue,
Nn est le code de maintenance (CM) normalisé à l'étape précédente,
GAIN est un premier coefficient déterminé par ladite fonction non linéaire (FNL) sur la base de la valeur normalisée Nn,
OFFSET est un second coefficient déterminé par ladite fonction non linéaire (FNL) sur la base de la valeur normalisée Nn.

**7.** Procédé selon la revendication 6, dans lequel ladite fonction non linéaire (FNL) comprend une fonction non linéaire continue **caractérisée** géométriquement par une série de segments ou de lignes discontinues présentant chacun(e) un coefficient angulaire relatif par comparaison à un système de référence préétabli.

**8.** Procédé selon la revendication 7, dans lequel ladite fonction non linéaire (FNL) comprend la table montrée ci-dessous constituée par une pluralité de segments (compris entre 1 et 17), dans lequel chaque segment (ou ligne discontinue) est défini par un intervalle compris entre une valeur « début » numérique et une valeur « fin » numérique à laquelle correspondent sans équivoque un premier coefficient et un second coefficient.

| Segment | Début | Fin | Gain | Offset |
|---|---|---|---|---|
| 1 | 0 | 7655 | -17668 | 8166 |
| 2 | 7655 | 10254 | -13616 | 7693 |
| 3 | 10254 | 13470 | -11004 | 7284 |
| 4 | 13470 | 17139 | -9556 | 6987 |
| 5 | 17139 | 20901 | -9250 | 6907 |
| 6 | 20901 | 23230 | -10270 | 7232 |
| 7 | 23230 | 25275 | -11440 | 7647 |
| 8 | 25275 | 26967 | -13942 | 8612 |
| 9 | 26967 | 27672 | -17382 | 10027 |
| 10 | 27672 | 28287 | -19180 | 10787 |
| 11 | 28287 | 28815 | -21844 | 11937 |
| 12 | 28815 | 29262 | -26976 | 14193 |
| 13 | 29262 | 29638 | -30676 | 15845 |
| 14 | 29638 | 29949 | -38772 | 19507 |
| 15 | 29949 | 30205 | -45056 | 22377 |
| 16 | 30205 | 30577 | -62188 | 30274 |
| 17 | 30577 | 65535 | -99836 | 47840 |

**9.** Procédé selon l'une quelconque des revendications précédentes, dans lequel ledit premier nombre comprend le numéro d'identification de série dudit microcontrôleur (5) ; et ladite deuxième valeur numérique est produite par un compteur à l'intérieur dudit microcontrôleur (5) sur la base du nombre de conditions de demande de maintenance.

**10.** Système destiné à commander l'activation d'un système de séchage pour sécher un air comprimé (2) sur la base de la substitution survenue d'un filtre (3) dans le système de séchage (2),

ledit système comprend un système d'authentification électronique (10) à distance et un appareil de commande (4) électronique qui est conçu pour commander ledit système de séchage (2) et est prévu avec : un microcontrôleur (5), un afficheur (7), un dispositif de commande conçu pour permettre à un utilisateur d'entrer une donnée dans ledit microcontrôleur (5),
ledit système est configuré de manière à :

produire un code de maintenance (CM) dudit système de séchage (2) par ledit microcontrôleur (5),
déterminer, par ledit microcontrôleur (5), un premier mot-clé (PW1) sur la base dudit code de maintenance (CM),
afficher, par ledit afficheur (7), ledit code de maintenance (CM),
déterminer par ledit système d'authentification électronique (10) à distance un second mot-clé (PW2) authentifié sur la base dudit code de maintenance (CM),
entrer ledit second mot-clé (PW2) authentifié dans ledit microcontrôleur (5),
comparer, par ledit microcontrôleur (5), ledit premier mot-clé (PW1) avec ledit second mot-clé (PW2),
authentifier, par ledit microcontrôleur (5), l'activation du fonctionnement dudit système de séchage (2) sur la base du résultat de ladite comparaison,
ledit système est **caractérisé en ce qu'**il est en outre configuré pour :

déterminer ledit code de maintenance (CM) sur la base d'un premier paramètre indiquant un code associé audit microcontrôleur (5) et d'un second paramètre indiquant un compteur d'événements,
mettre en oeuvre une fonction non linéaire (FNL) pour déterminer ledit premier mot-clé (PW1) et ledit second mot-clé (PW2) sur la base dudit code de maintenance (CM).

FIG. 1

FIG. 2

```
┌─────────────────────┐
│         200         │
└─────────────────────┘
           │
           ▼
┌─────────────────────┐
│         210         │
└─────────────────────┘
           │
           ▼
┌─────────────────────┐
│         220         │
└─────────────────────┘
           │
           ▼
┌─────────────────────┐
│         230         │
└─────────────────────┘
           │
           ▼
┌─────────────────────┐
│         240         │
└─────────────────────┘
           │
           ▼
┌─────────────────────┐
│         250         │
└─────────────────────┘
           │
           ▼
┌─────────────────────┐
│         260         │
└─────────────────────┘
           │
           ▼
┌─────────────────────┐
│         270         │
└─────────────────────┘
           │
           ▼
┌─────────────────────┐
│         280         │
└─────────────────────┘
```

FIG. 3

```
┌─────────────────────┐
│                     │
│         300         │
│                     │
└──────────┬──────────┘
           │
           ▼
┌─────────────────────┐
│                     │
│         310         │
│                     │
└──────────┬──────────┘
           │
           ▼
┌─────────────────────┐
│                     │
│         320         │
│                     │
└─────────────────────┘
```

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102020000024778
- US 2015046710 A
- US 2003001721 A
- US 2003093381 A
- US 4688250 A